# FASCICULE DE BREVET EUROPEEN

(11) **EP 2 755 531 B1**
(45) Date de publication et mention de la délivrance du brevet: **12.10.2016**
(21) Numéro de dépôt: 12772795.6
(22) Date de dépôt: 14.09.2012
(51) Int. Cl.: A47J 27/092

(54) **APPAREIL DE CUISSON SOUS PRESSION COMPORTANT UN MOYEN DE SECURITE A L'OUVERTURE**
DRUCKKOCHVORRICHTUNG MIT EINER ÖFFNUNGSSICHERHEITSVORRICHTUNG
PRESSURE COOKING DEVICE COMPRISING AN OPENING SAFETY MEANS

(30) Priorité: 15.09.2011 CN 201110273383
(43) Date de publication de la demande: 23.07.2014
(73) Titulaire: SEB S.A., 69130 Ecully (FR)
(72) Inventeur: SEURAT GUIOCHET, Claire, Marie-Aurore, 21490 Bretigny (FR); BLANC, Hervé, Eugène, René, 21000 Dijon (FR); LUO, Quan, Thaizou City Zhejiang 317604 (CN); JIN, Weiping, Thaizou City Zhejiang 317604 (CN); ZHENG, Zufu, Thaizou City Zhejiang 317604 (CN)
(74) Mandataire: Weber, Jean-François
(86) Numéro de dépôt international: PCT/FR2012/052071
(87) Numéro de publication internationale: WO 2013/038117

(56) Documents cités:
- EP-A1- 1 295 551
- WO-A1-85/03851
- DE-A1- 3 811 675
- GB-A- 2 150 462

## Description

### DOMAINE TECHNIQUE

La présente invention se rapporte au domaine technique général des appareils de cuisson sous pression comprenant une cuve et un couvercle destiné à être verrouillé sur la cuve afin de former une enceinte de cuisson suffisamment étanche pour pouvoir monter significativement en pression sous l'influence d'une source de chauffe, lesdits appareils étant destinés à assurer la cuisson sous pression de vapeur des aliments contenus dans la cuve.

La présente invention concerne plus particulièrement un appareil de cuisson d'aliments sous pression comprenant au moins :
- une cuve et un couvercle destiné à être associé à ladite cuve pour former une enceinte de cuisson,
- un premier orifice ménagé à travers le couvercle,
- un moyen de sécurité à l'ouverture monté mobile entre d'une part une position de libération, dans laquelle il autorise la dissociation du couvercle et de la cuve tout en libérant ledit premier orifice pour mettre en communication l'intérieur de l'enceinte avec l'extérieur, et d'autre part une position de blocage, dans laquelle il interdit la dissociation du couvercle et de la cuve tout en obturant ledit premier orifice afin de permettre la montée en pression de l'enceinte, ledit moyen de sécurité à l'ouverture étant conçu pour se trouver en position de blocage lorsque la pression régnant dans l'enceinte est supérieure ou égale à une valeur prédéterminée.

### TECHNIQUE ANTERIEURE

Les appareils de cuisson sous pression, du genre autocuiseurs, sont bien connus. Ils permettent de cuire des aliments à une pression prédéterminée supérieure à la pression atmosphérique, appelée pression de fonctionnement, régulée par une soupape de fonctionnement. Ces appareils de cuisson sous pression sont habituellement munis de moyens de sécurité à l'ouverture, conformément aux normes de sécurité en vigueur dans de nombreux pays. De tels moyens de sécurité à l'ouverture sont bien connus en tant que tels. Ils permettent une sécurité positive à l'ouverture, en autorisant la désolidarisation du couvercle et de la cuve de l'appareil uniquement lorsque le niveau de pression régnant dans l'enceinte de cuisson atteint un niveau acceptable du point de vue de la sécurité de l'utilisateur, c'est-à-dire un niveau de pression suffisamment faible pour éviter tout échappement brutal du couvercle, ou toute projection de matières de cuisson brûlantes. Ces moyens de sécurité à l'ouverture connus sont généralement constitués par une tige manométrique sensible à la pression régnant dans l'enceinte de cuisson, et montée mobile entre une position basse, dans laquelle elle autorise le déverrouillage du couvercle, et une position haute, dans laquelle elle coopère avec le moyen de verrouillage / déverrouillage du couvercle de façon à empêcher le passage de la position de verrouillage à la position de déverrouillage. Dans ces appareils connus, la tige manométrique monte et descend automatiquement uniquement en fonction de la pression régnant dans l'enceinte de cuisson. La position de la tige manométrique sert également d'indicateur visuel permettant à l'utilisateur de savoir si la pression régnant dans l'enceinte a (ou non) atteint la pression de fonctionnement. La tige manométrique de ces appareils de l'art antérieur présente de surcroît un compromis poids / dimension calculé pour favoriser une montée précoce de la tige dans sa position haute, par exemple dès que la pression à l'intérieur de l'autocuiseur atteint ou dépasse 0,5 kPa. Une montée précoce est en effet recherchée pour monter en pression le plus rapidement possible, ce qui n'est pas possible tant que la tige manométrique se trouve en position basse, cette position n'étant en effet pas étanche. Cependant, même lorsque la tige est théoriquement conformée et dimensionnée pour favoriser sa montée précoce en position haute, on constate en pratique qu'il est généralement nécessaire de soumettre l'appareil à une source de chauffe présentant une puissance importante pour obtenir effectivement une telle montée « *précoce* » de la tige. Par ailleurs, si le compromis poids / dimension des tiges manométriques connues est choisi pour favoriser la montée précoce de la tige, ce même compromis défavorise la descente de la tige de sa position haute à sa position basse. En effet, on constate en pratique que du fait notamment de la masse très faible de la tige, choisie pour favoriser sa montée, la descente de la tige présente souvent un caractère aléatoire, et intervient en tous les cas à une pression généralement très inférieure à la pression qui a provoqué sa montée. Cela a pour conséquence que l'utilisateur doit généralement attendre une durée relativement longue entre le moment où il a déclenché la décompression de l'appareil, et l'instant où il peut effectivement séparer le couvercle de la cuve, afin d'accéder aux aliments. En définitive, les moyens de sécurité à l'ouverture équipant habituellement les appareils de cuisson connus ralentissent considérablement la durée globale du cycle de cuisson, en imposant des temps de latence en début et en fin de cuisson. Cette conception classique interdit d'ailleurs d'utiliser un autocuiseur comme une marmite classique, avec laquelle l'utilisateur peut très facilement et rapidement ouvrir et refermer à volonté le couvercle en cours de cuisson, pour contrôler directement les aliments, les assaisonner ou les goûter par exemple.

Afin de permettre à l'utilisateur de pouvoir rapidement accéder, en cours de cycle de cuisson, à l'intérieur d'un autocuiseur, il a été proposé une conception alternative mettant en oeuvre une tige de sécurité relativement lourde, afin de favoriser une descente franche et rapide de la tige dès que la pression diminue. Cette conception alternative permet également d'entraîner automatiquement, sous l'effet du verrouillage du couvercle, la tige de sécurité dans sa position haute étanche, dans l'objectif d'accélérer la montée en pression de l'appareil. Cette conception alternative, si elle donne globalement satisfaction, n'en présente pas moins elle aussi des inconvénients certains. En premier lieu, cette conception ne permet pas d'informer l'utilisateur de l'atteinte de la pression de fonctionnement. En effet, la tige de sécurité est en position haute dès avant la montée en pression, et ne change donc pas de position sous l'effet de la montée en pression et de l'atteinte de la pression de fonctionnement. En outre, cette conception alternative ne permet pas de maîtriser le moment où la soupape de fonctionnement va commencer à fonctionner pour réguler la pression. En effet, l'enceinte de cuisson étant étanche avant même la montée en pression (puisque la tige de sécurité est forcée dans sa position haute), un volume d'air important reste emprisonné dans l'autocuiseur. Cet air présent en relativement grande quantité interfère avec le fonctionnement de la soupape de fonctionnement, rendant notamment aléatoire le début du fonctionnement de cette dernière. Il est dès lors impossible, avec une telle conception, d'obtenir un démarrage du fonctionnement de la soupape de fonctionnement qui soit homogène et répétable pour un même lot d'autocuiseurs. Ceci constitue bien entendu un inconvénient important, notamment si l'appareil est équipé d'un minuteur déclenchant un décompte de temps de cuisson à partir du moment où la pression de fonctionnement est atteinte. De plus, cette présence d'air empêche la température régnant dans l'enceinte d'atteindre le niveau qu'elle pourrait atteindre en présence uniquement de vapeur, ce qui contribue à rallonger le temps de cuisson. Il est donc nécessaire, afin de remédier à ces inconvénients, d'équiper l'enceinte d'un système de purge d'air en début de cuisson, permettant d'évacuer l'air contenue dans l'enceinte au cours de la montée en pression. L'adjonction d'un tel organe de purge d'air entraîne cependant un surcoût.

Les caractéristiques du préambule de la revendication 1 sont décrites par le document DE-3811675A1.

### EXPOSE DE L'INVENTION

Les objets assignés à l'invention visent en conséquence à porter remède aux divers inconvénients énumérés précédemment, et à proposer un nouvel appareil de cuisson d'aliments sous pression permettant de réduire la durée du cycle de cuisson et d'améliorer la répétabilité de ce dernier, tout en étant d'un usage particulièrement sûr pour l'utilisateur.

Un autre objet de l'invention vise à proposer un nouvel appareil de cuisson d'aliments sous pression de conception particulièrement simple, fiable et économique.

Un autre objet de l'invention vise à proposer un nouvel appareil de cuisson d'aliments sous pression doté d'un moyen de sécurité à l'ouverture dont les performances (pression de montée et de descente, instant de déclenchement) sont améliorées et particulièrement homogènes.

Un autre objet de l'invention vise à proposer un nouvel appareil de cuisson d'aliments sous pression permettant une durée de cycle de cuisson optimisée.

Un autre objet de l'invention vise à proposer un nouvel appareil de cuisson d'aliments sous pression qui, tout en présentant un excellent niveau de sécurité, est de construction particulièrement simplifiée et compacte.

Un autre objet de l'invention vise à proposer un nouvel appareil de cuisson d'aliments sous pression de construction particulièrement économique et facile à industrialiser.

Un autre objet de l'invention vise à proposer un nouvel appareil de cuisson d'aliments sous pression qui est particulièrement ergonomique et facile à utiliser.

Un autre objet de l'invention vise à proposer un nouvel appareil de cuisson d'aliments sous pression dont la conception permet un fonctionnement particulièrement sûr y compris lorsque la source de chauffe à laquelle l'appareil est destiné à être soumis présente une puissance importante.

Les objets assignés à l'invention sont atteints à l'aide d'un appareil de cuisson d'aliments sous pression, de préférence constitué par un autocuiseur domestique, comprenant au moins :
- une cuve et un couvercle destiné à être associé à ladite cuve pour former une enceinte de cuisson,
- un premier orifice ménagé à travers le couvercle,
- un moyen de sécurité à l'ouverture monté mobile entre d'une part une position de libération, dans laquelle il autorise la dissociation du couvercle et de la cuve tout en libérant ledit premier orifice pour mettre en communication l'intérieur de l'enceinte avec l'extérieur, et d'autre part une position de blocage, dans laquelle il interdit la dissociation du couvercle et de la cuve tout en obturant ledit premier orifice afin de permettre la montée en pression de l'enceinte, ledit moyen de sécurité à l'ouverture étant conçu pour se trouver en position de blocage lorsque la pression régnant dans l'enceinte est supérieure ou égale à une valeur prédéterminée dite pression de montée,
caractérisé en ce que ledit moyen de sécurité à l'ouverture est conçu pour passer, lorsqu'il se déplace de l'une à l'autre desdites positions de libération et de blocage, par une première position intermédiaire dans laquelle il libère ledit premier orifice pour mettre en communication l'intérieur de l'enceinte avec l'extérieur, ledit appareil comprenant en outre un moyen d'actionnement du moyen de sécurité à l'ouverture, conçu pour permettre d'amener le moyen de sécurité à l'ouverture dans sa première position intermédiaire à partir de sa position de libération quel que soit le niveau de pression régnant dans l'enceinte de cuisson.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels :
- La figure 1 illustre, selon une vue générale en perspective, un appareil de cuisson conforme à l'invention.
- La figure 2 illustre, selon une vue en perspective, la cuve de l'appareil de la figure 1.
- La figure 3 illustre, selon une vue en perspective, un exemple de réalisation d'un moyen de sécurité à l'ouverture, formé en l'espèce par une tige manométrique, équipant l'appareil de cuisson d'aliments de la figure 1.
- La figure 4 illustre, selon une vue en perspective, trois composants élémentaires qui une fois assemblés forment la tige manométrique de la figure 3.
- La figure 5 illustre, selon une vue en perspective de dessus, une pièce de l'appareil de cuisson illustré aux figures 1 et 2 qui forme à la fois un moyen d'actionnement du moyen de sécurité à l'ouverture, un verrou destiné à empêcher (en position de verrouillage) la séparation du couvercle et de la cuve et un organe de commande (se présentant en l'espèce sous la forme d'un bouton coulissant) destinés à commander le déplacement du moyen d'actionnement et du verrou.
- La figure 6 représente la pièce de la figure 5 mais selon une vue en perspective de dessous.
- La figure 7 illustre, selon une vue en coupe, la pièce unitaire des figures 5 et 6.
- La figure 8 illustre, selon une vue en coupe, un détail de réalisation du couvercle lorsque l'autocuiseur se trouve en configuration ouverte, c'est-à-dire lorsque le couvercle n'est pas accouplé à la cuve.
- La figure 9 illustre, selon une vue en perspective partiellement en coupe, le détail de réalisation de la figure 8.
- La figure 10 illustre, selon une vue en perspective de dessous, le détail de réalisation des figures 8 et 9.
- La figure 11 est une vue similaire à celle de la figure 8, à la différence près que le couvercle est cette fois accouplé à la cuve, l'appareil illustré étant doté d'un verrou se trouvant dans une position intermédiaire entre ses positions de verrouillage et de déverrouillage.
- La figure 12 illustre, selon une vue en coupe, le détail de réalisation de la figure 11, à la différence près que le verrou est cette fois en position de verrouillage et que le moyen d'actionnement a amené le moyen de sécurité à l'ouverture dans sa première position intermédiaire, la pression régnant au sein de l'enceinte de cuisson étant inférieure à la pression de montée.
- La figure 13 illustre le détail de réalisation de la figure 12 selon une vue en perspective de dessous.
- La figure 14 illustre le détail de réalisation des figures 12 et 13 selon une vue en perspective partiellement en coupe.
- La figure 15 illustre, selon une vue en coupe, le détail de réalisation de la figure 12 à la différence près que le moyen de sécurité à l'ouverture se trouve en position de blocage sous l'effet de la pression régnant dans l'enceinte de cuisson, qui a atteint ou dépassé la pression de montée.
- La figure 16 illustre, selon une vue en perspective partiellement en coupe, le détail de réalisation de la figure 15.
- La figure 17 illustre, selon une vue en coupe frontale, le couvercle de l'appareil des figures 15 et 16.
- La figure 18 illustre, selon une vue en perspective de dessous, le couvercle de la figure 17.

### MEILLEURE MANIERE DE REALISER L'INVENTION

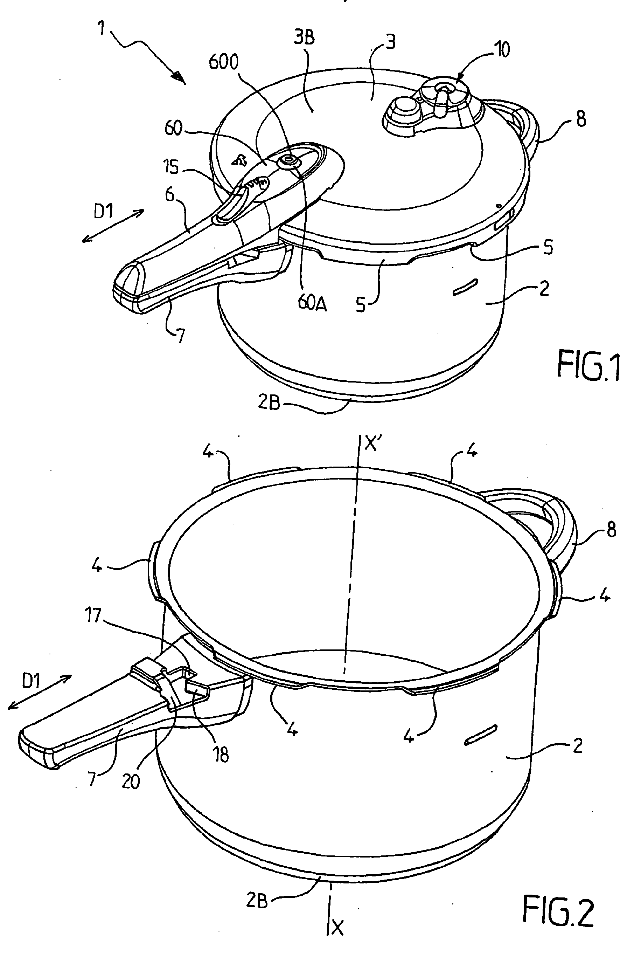

L'invention concerne un appareil 1 de cuisson sous pression, qui est de préférence un appareil domestique, destiné à être utilisé dans un cadre familial. De façon préférentielle, l'appareil 1 est constitué, conformément au mode de réalisation illustré aux figures, par un autocuiseur domestique. L'appareil 1 comprend, de manière classique, une cuve 2 formant un récipient de cuisson et présentant de façon préférentielle sensiblement une symétrie de révolution selon un axe X-X' (cf. figure 2). Dans ce qui suit, l'adjectif « *axial* » se réfèrera à la direction de cet axe de symétrie X-X', direction qui s'apparente à la direction verticale lorsque l'appareil 1 est en fonctionnement normal.

La cuve 2 est de manière classique fabriquée à partir d'un matériau métallique et est pourvu d'un fond thermo-conducteur 2B. L'appareil 1 comprend également un couvercle 3 destiné à être associé à ladite cuve 2 (c'est-à-dire rapporté sur la cuve 2 et fixé à cette dernière) pour former une enceinte de cuisson. Ladite enceinte de cuisson est conçue pour permettre une montée de la pression en son sein, de façon que la pression régnant au sein de l'enceinte soit significativement supérieure à la pression atmosphérique. A cette fin, l'enceinte de cuisson est sensiblement étanche, c'est-à-dire suffisamment hermétique pour permettre une montée en pression de l'appareil jusqu'à un niveau prédéterminé, appelé pression de fonctionnement, qui excède par exemple la pression atmosphérique d'une valeur comprise dans une plage s'étendant sensiblement entre 10 et 150 kPa, de préférence entre 50 et 120 kPa, et de façon encore plus préférentielle entre 80 et 100 kPa. Avantageusement, et comme illustré aux figures, l'appareil 1 de cuisson conforme à l'invention comprend un moyen de régulation de pression 10, du genre soupape de régulation, monté en communication étanche avec un perçage ménagé à travers le couvercle 3, ledit moyen de régulation de pression 10 étant conçu pour que la pression régnant dans l'enceinte n'excède sensiblement pas la pression de fonctionnement. Afin d'assurer l'étanchéité de l'enceinte de cuisson, un joint d'étanchéité annulaire 2A est avantageusement interposé, comme cela est bien connu en tant que tel, entre la cuve 2 et le couvercle 3.

Avantageusement, l'appareil 1 comprend un système d'accouplement à baïonnette capable d'évoluer entre une configuration d'accouplement du couvercle 3 et de la cuve 2 et une configuration de désaccouplement du couvercle 3 et de la cuve 2. A cet effet, ledit système d'accouplement à baïonnette comprend avantageusement :
- des rampes inférieures 4 de verrouillage solidaires de la cuve 2 et disposées de façon régulièrement espacées au niveau du bord supérieur libre de la paroi latérale de la cuve 2,
- et des rampes supérieures 5 de verrouillage solidaires du couvercle 3, réparties, de façon régulière, sur la périphérie du couvercle 3.

Ainsi, pour ouvrir et fermer l'appareil 1, c'est-à-dire pour respectivement désaccoupler et accoupler la cuve 2 et le couvercle 3, il est nécessaire de faire pivoter le couvercle 3 relativement à la cuve 2 selon l'axe X-X', de manière à ce que les rampes supérieures 5 désengagent ou engagent les rampes inférieures 4. Ainsi, lorsque le système d'accouplement à baïonnette se trouve en configuration d'accouplement, le couvercle 3 est fixé à la cuve 2 et peut résister à la montée en pression de l'appareil 1 jusqu'à la pression de fonctionnement. Au contraire, lorsque le système d'accouplement est en configuration d'accouplement, le couvercle 3 est simplement posé sur la cuve 2, sans que ses rampes supérieures 5 n'engagent les rampes inférieures 4, de sorte qu'il ne forme pas avec la cuve 2 une enceinte susceptible de résister à la montée en pression. Afin de faciliter les opérations d'accouplement et de désaccouplement du couvercle 3 et de la cuve 2, l'appareil 1 comprend avantageusement au moins une poignée de couvercle 6 solidaire du couvercle 3 et au moins une poignée de cuve 7 solidaire de la cuve 2. De préférence, la poignée de couvercle 6 est positionnée vers la périphérie du couvercle 3, et s'étend sensiblement radialement vers l'extérieur, en considération de l'axe X-X'. De même, la poignée de cuve 7 est avantageusement fixée sur la paroi latérale annulaire de la cuve 2 et s'étend elle aussi sensiblement radialement vers l'extérieur en considération de l'axe de symétrie X-X'. Chacune desdites poignées de couvercle 6 et de cuve 7 présentent ainsi une forme sensiblement allongée, de longueurs avantageusement sensiblement identiques.

Il est bien entendu tout à fait envisageable que le couvercle 3 et/ou la cuve 2 comporte(nt) plusieurs poignées. Ainsi, la cuve 2 comporte avantageusement, en sus de la poignée de cuve 7 décrite ci-avant, une anse de préhension 8 disposée de façon diamétralement opposée à la poignée de cuve 7. Avantageusement, lesdites poignées de cuve 7 et de couvercle 6 sont mobiles en rotation (selon l'axe de symétrie X-X') l'une par rapport à l'autre une fois le couvercle 3 apporté sur la cuve 2, de manière à commander le passage du système d'accouplement à baïonnette de sa configuration d'accouplement à sa configuration de désaccouplement et vice-versa. En d'autres termes, une fois rapportés sur la cuve 2, le couvercle 3 et la poignée de couvercle 6 associés sont ainsi mobiles en rotation par rapport à la cuve 2 de manière à permettre l'ouverture (désengagement des rampes 4, 5) ou la fermeture (engagement des rampes 4, 5) de l'appareil 1. Avantageusement, le système d'accouplement à baïonnette est conçu pour que la poignée de couvercle 6 se retrouve superposée, et de préférence alignée, avec la poignée de cuve 7 en configuration d'accouplement (illustré à la figure 1). Ainsi, pour accoupler le couvercle 3 et la cuve 2, il suffit à un utilisateur de poser le couvercle 3 sur la cuve 2 de façon que les poignées de cuve 7 et de couvercle 6 présentent un décalage angulaire, puis de rapprocher lesdites poignées de cuve 7 et de couvercle 6 par rotation (selon l'axe de symétrie X-X') du couvercle 3 sur la cuve 2, jusqu'à ce que les poignées de cuve 7 et de couvercle 6 soient superposées et alignées comme illustré à la figure 1. Dans ce qui suit, il sera exclusivement fait référence, par souci de concision et de simplicité de description, à un appareil 1 de cuisson doté d'un système d'accouplement à baïonnette, comme illustré aux figures. Il est cependant tout à fait envisageable que l'appareil 1 mette en oeuvre un système d'accouplement alternatif, qui ne repose pas sur un inter-engagement de rampes. Par exemple, le système d'accouplement peut être un système à mâchoires, à segments, à étrier, à couvercle rentrant (trou d'homme) ou tout autre système bien connu dans le domaine, sans pour autant que l'on sorte du cadre de l'invention.

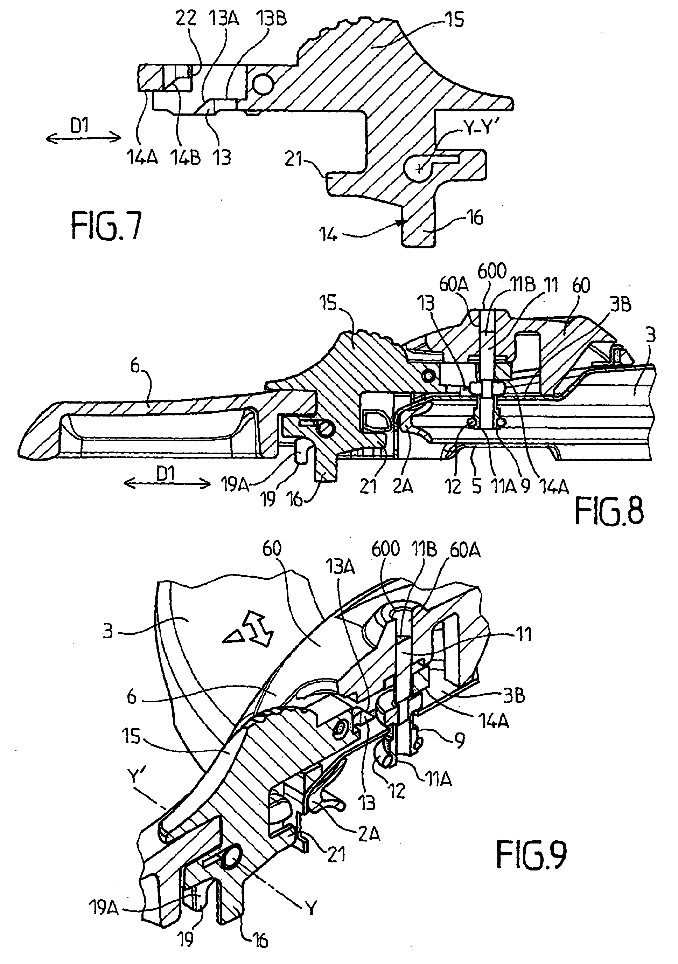

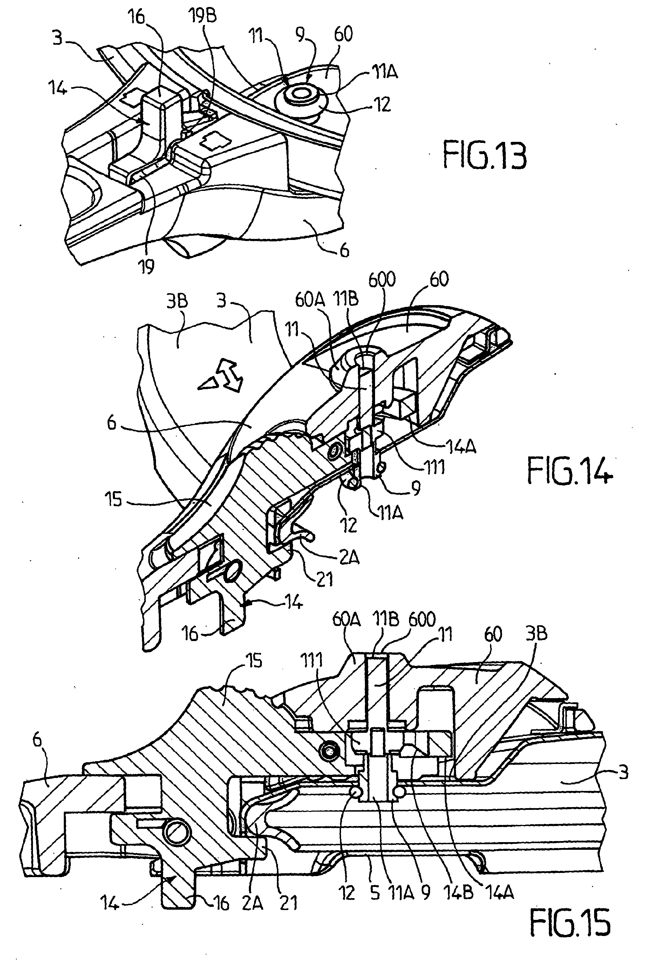

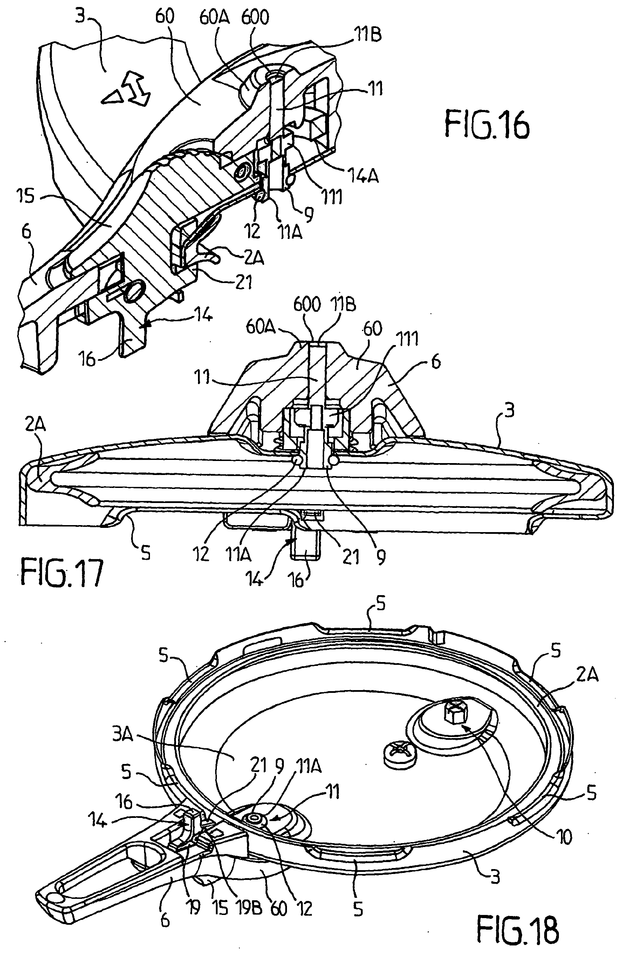

L'appareil 1 comprend également un premier orifice ménagé à travers le couvercle 3 entre la face interne 3A du couvercle 3, destinée à se trouver en regard de l'intérieur de l'enceinte de cuisson, et la face externe 3B opposée dudit couvercle 3, le premier orifice formant ainsi un passage entre l'intérieur de l'enceinte de cuisson et l'extérieur. L'appareil 1 comprend en outre un moyen de sécurité à l'ouverture 9 monté mobile, de préférence sur le couvercle 3, entre d'une part une position de libération (illustrée par exemple aux figures 8 et 9) dans laquelle le moyen de sécurité à l'ouverture 9 autorise la dissociation du couvercle 3 et de la cuve 2 (c'est-à-dire l'ouverture de l'appareil 1) tout en libérant ledit premier orifice pour mettre en communication l'intérieur de l'enceinte de cuisson avec l'extérieur (empêchant ainsi l'appareil 1 de monter en pression) et d'autre part une position de blocage (illustrée par exemple aux figures 15 à 18) dans laquelle ledit moyen de sécurité à l'ouverture 9 interdit la dissociation du couvercle 3 et de la cuve 2 (c'est-à-dire empêche l'ouverture de l'appareil 1) tout en obturant, c'est-à-dire fermant hermétiquement, ledit premier orifice afin de permettre la montée en pression de l'enceinte jusqu'à un niveau correspondant à la pression de fonctionnement. De préférence, lesdites positions de libération et de blocage sont des positions de butée qui délimitent entre elles la course maximale du moyen de sécurité à l'ouverture 9. Conformément à l'invention, le moyen de sécurité à l'ouverture 9 est conçu pour se trouver en position de blocage lorsque la pression régnant dans l'enceinte est supérieure ou égale à une valeur prédéterminée, dite pression de montée. Un tel moyen de sécurité à l'ouverture est bien connu dans son principe général. Il permet une sécurité positive à l'ouverture, en autorisant la séparation du couvercle 3 et de la cuve 2 uniquement lorsque le niveau de pression régnant dans l'enceinte atteint un niveau acceptable du point de vue de la sécurité de l'utilisateur, c'est-à-dire à un niveau auquel par exemple le couvercle 3 ne risque pas d'être propulsé violemment.

Avantageusement, la position de libération du moyen de sécurité à l'ouverture 9 est une position de rappel. Par exemple, le moyen de sécurité à l'ouverture 9 peut être rappelé en position de libération par un effort de rappel formé par le poids dudit moyen de sécurité à l'ouverture 9. Ce poids est dans ce cas choisi pour maintenir le moyen de sécurité à l'ouverture 9 dans sa position de libération tant que la pression régnant dans l'enceinte est inférieure à la pression de montée. Le moyen de sécurité à l'ouverture 9 est également conçu pour être maintenu dans sa position de blocage par un effort de maintien résultant uniquement de la pression régnant dans l'enceinte. En d'autres termes, la position de blocage ne peut être atteinte par le moyen de sécurité à l'ouverture 9 que lorsque la pression régnant dans l'enceinte est supérieure ou égale à la pression de montée. Dans ce cas, la pression régnant dans l'enceinte exerce en effet une force suffisante pour entraîner et maintenir le moyen de sécurité à l'ouverture 9 en position de blocage. Dès lors que la pression régnant dans l'enceinte redescend en dessous de la pression de montée, le moyen de sécurité à l'ouverture 9 quitte sa position de blocage et retourne en direction de sa position de libération. Une fois en position de blocage, le moyen de sécurité à l'ouverture 9 interagit, directement ou indirectement avec le couvercle 3 et/ou la cuve 2 pour rendre impossible la séparation du couvercle 3 et de la cuve 2. Dans l'exemple illustré aux figures, le moyen de sécurité à l'ouverture 9 est conçu pour, lorsqu'il se trouve en position de blocage, empêcher directement ou indirectement le système d'accouplement à baïonnette de rejoindre sa configuration de désaccouplement.

Avantageusement, le moyen de sécurité à l'ouverture 9 est conçu pour avoir tendance à évoluer vers sa position de libération, à partir de sa position de blocage, dès lors que la pression régnant dans l'enceinte atteint une valeur prédéterminée, dite pression de descente, qui est sensiblement voisine de, et idéalement égale à, la pression de montée.

Avantageusement, le moyen de sécurité à l'ouverture 9 comprend une tige manométrique 11 montée à coulissement vertical (c'est-à-dire selon la direction matérialisée par l'axe X-X') sur le couvercle 3 entre une position basse formant la position de libération et une position haute formant la position de blocage. Le recours à une telle tige manométrique 11 pour former le moyen de sécurité à l'ouverture 9 est préféré, étant entendu toutefois qu'il est parfaitement envisageable de recourir à des moyens alternatifs (il peut s'agir par exemple d'un clapet mobile en rotation).

De préférence, et comme illustré aux figures, la tige manométrique 11 est montée coaxialement au premier orifice, de façon à interagir avec ce dernier et ainsi obturer ledit premier orifice, ou le libérer de façon plus ou moins importante selon la fonction recherchée.

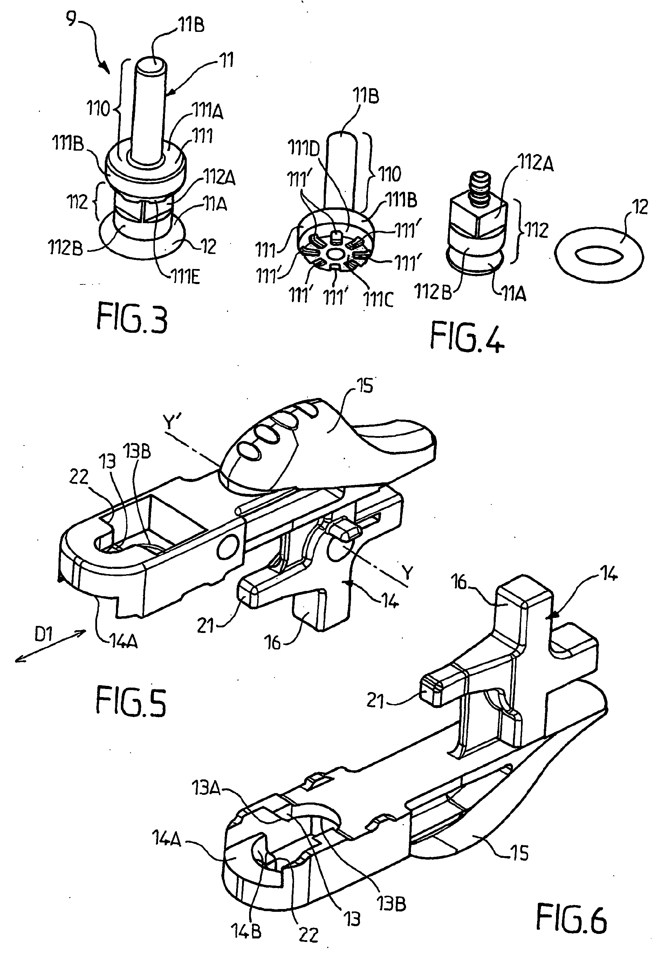

Avantageusement, la tige 11 présente une forme longiligne et s'étend entre une extrémité inférieure 11A pourvue d'une garniture d'étanchéité 12 et une extrémité supérieure 11B. Avantageusement, la tige manométrique 11 comporte une première portion 110 sensiblement rectiligne et de forme avantageusement cylindrique, ladite première portion 110 s'étendant entre une première extrémité, correspondant à l'extrémité supérieure 11B de la tige 11, et une deuxième extrémité. Cette deuxième extrémité est raccordée à une portion élargie 111 qui présente un encombrement transversal supérieur au diamètre du premier orifice. La portion élargie 111 est conçue pour venir en appui contre la face externe 3B du couvercle 3 et coiffer ainsi le premier orifice lorsque le moyen de sécurité à l'ouverture 9 est en position de libération. La portion élargie 111 se présente par exemple sous la forme d'un pion discoïde s'étendant axialement entre une face supérieure 111A à partir de laquelle s'élève la première portion 110 et une face inférieure 111C. La face supérieure 111A et la face inférieure 111C sont reliées par une paroi latérale formée par une face latérale supérieure 111B de forme sensiblement cylindrique qui s'élève à partir de la face supérieure 111A et une face latérale inférieure 111D de forme tronconique qui relie la face inférieure 111C et la face latérale supérieure 111B. La tige 11 est avantageusement pourvue d'indentations 111' ménagées sur la face inférieure 111C et la face latérale inférieure 111 D. Lesdites indentations 111' permettent d'éviter que la face inférieure 111C en question obture de manière étanche le premier orifice lorsqu'elle repose sur la face externe 3B du couvercle 3. Les indentations 111' permettent en effet de ménager chacune un canal de fuite entre la face extérieure 3B du couvercle 3 et la face inférieure 111C. A partir de ladite face inférieure 111C de la portion élargie 111 s'étend, jusqu'à la première extrémité 11A de la tige 11, une deuxième portion 112 dont la section est légèrement inférieure à celle du premier orifice. Ladite deuxième section 112 est destinée à s'étendre à travers ledit premier orifice, de telle sorte que la portion élargie 111 se trouve du côté de la face externe 3B du couvercle 3, tandis que la première extrémité 11A, au niveau de laquelle est montée la garniture d'étanchéité 12, se trouve quant à elle du côté de la face interne 3A du couvercle 3. La hauteur de la deuxième portion 112 (c'est-à-dire la longueur de la deuxième portion 112 parallèlement à l'axe de symétrie X-X') définit ainsi la course maximale de déplacement de la tige 11 entre ses deux positions extrémales de libération (dans laquelle la face inférieure 111C de la portion élargie 111 vient en appui sur le premier orifice, contre la face externe 3A du couvercle 3, la garniture d'étanchéité 12 se trouvant alors à distance de la face interne 3A du couvercle 3) et de blocage (dans laquelle la garniture d'étanchéité 12 vient en appui contre la face interne 3A du couvercle 3, pour obturer le premier orifice, la portion élargie 111 se trouvant alors à distance de la face externe 3B du couvercle 3). La deuxième portion 112 est ainsi capturée dans le premier orifice par la garniture d'étanchéité 12 d'un côté et la portion élargie 111 de l'autre côté. Avantageusement, la deuxième portion 112 est elle-même subdivisée en un premier tronçon 112A qui s'étend à partir de la face inférieure 111C de la portion élargie 111 en direction de la première extrémité 11A et un deuxième tronçon 112B qui s'étend à partir du premier tronçon 112A jusqu'à la garniture d'étanchéité 12. Avantageusement, l'encombrement latéral du premier tronçon 112A (qui présente par exemple une section de forme non arrondie, par exemple carrée comme illustré) est inférieur à l'encombrement latéral du deuxième tronçon 112B (qui présente par exemple une section de forme sensiblement circulaire, comme illustré). De cette façon, le premier tronçon 112A définit, lorsqu'il se trouve dans le premier orifice, une section de fuite qui est sensiblement supérieure à la section de fuite définie par le deuxième tronçon 112B lorsque ce dernier ce trouve dans le premier orifice. Ceci permet de faire varier la section de fuite en fonction du positionnement axial de la tige 11, ce qui présente différents avantages expliqués plus en détail ultérieurement. En définitive, dans le cas de la conception préférentielle illustrée aux figures, et visible plus particulièrement aux figures 3 et 4, la tige manométrique 11 n'est capable d'obturer hermétiquement le premier orifice que lorsqu'elle se trouve dans sa position de blocage, dans laquelle la garniture d'étanchéité 12 vient en appui contre la face interne 3A du couvercle 3. En revanche, dès lors que la tige manométrique 11 se trouve dans une position autre que cette position de blocage, ladite tige 11 ménage, en coopération avec le premier orifice, une section de fuite. De préférence, afin de faciliter la fabrication de l'appareil 1, la tige manométrique 11 est réalisée par assemblage de trois pièces indépendantes, savoir une première pièce unitaire formant la première portion 110 et la portion élargie 111, une deuxième pièce unitaire formant la deuxième portion 112 destinée à être fixée à la première pièce, par exemple par sertissage, collage ou vissage, et une troisième pièce formée par la garniture d'étanchéité 12, laquelle se présente avantageusement sous la forme d'un joint toroïdal souple destiné à venir enserrer élastiquement l'extrémité inférieure de la deuxième pièce.

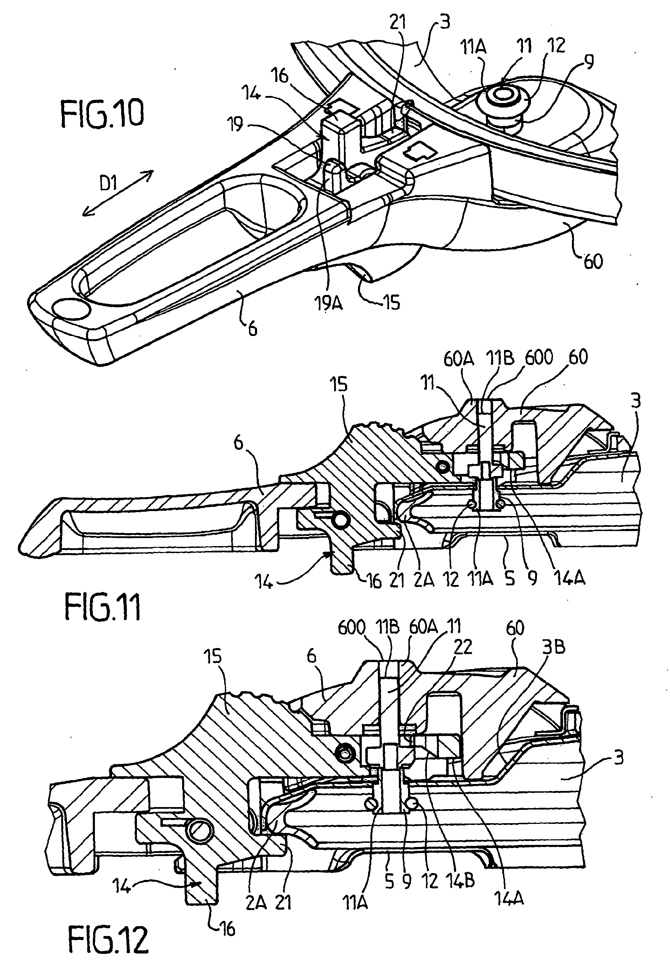

Le moyen de sécurité à l'ouverture 9 est en outre conçu pour passer, lorsqu'il se déplace de l'une à l'autre desdites positions de libération et de blocage, par une première position intermédiaire (illustrée aux figures 12 à 14) dans laquelle ledit moyen de sécurité à l'ouverture 9 libère ledit premier orifice pour mettre en communication l'intérieur de l'enceinte avec l'extérieur. En d'autres termes, la première position intermédiaire est située entre les positions de libération et de blocage, de sorte que le moyen de sécurité à l'ouverture 9 doit se déplacer selon une première course pour rejoindre sa position de blocage à partir de sa première position intermédiaire et selon une deuxième course rejoindre sa position de libération à partir de sa première position intermédiaire, la somme desdites première et deuxième courses correspondant à la course maximale du moyen de sécurité à l'ouverture 9, c'est-à-dire, dans le mode de réalisation illustré aux figures, à la hauteur de la deuxième portion 112. Comme exposé précédemment, la première position intermédiaire est en outre une position de fuite, dans laquelle le moyen de sécurité à l'ouverture n'obture pas (ou du moins pas totalement) le premier orifice.

L'appareil 1 comprend également un moyen d'actionnement 13 du moyen de sécurité à l'ouverture 9, ledit moyen d'actionnement 13 étant conçu pour permettre d'amener le moyen de sécurité à l'ouverture 9 dans sa première position intermédiaire à partir de sa position de libération, indépendamment du niveau de pression régnant dans l'enceinte de cuisson, et en particulier même lorsque le niveau de pression régnant dans l'enceinte de cuisson est inférieur à la pression de montée, et n'excède par exemple pas la pression atmosphérique. Le moyen d'actionnement 13 est ainsi conçu pour permettre d'amener le moyen de sécurité à l'ouverture 9 dans ladite première position intermédiaire à partir de la position de libération quel que soit le niveau de pression (pour autant bien sûr qu'il soit inférieur à la pression de montée), et en particulier même lorsque la pression régnant au sein de l'enceinte est sensiblement égale à la pression atmosphérique. En d'autres termes, le moyen d'actionnement 13 permet de propulser de préférence directement, par génération d'une force qui ne dépend pas de la pression régnant au sein de l'enceinte, le moyen de sécurité à l'ouverture 9 dans sa première position intermédiaire à partir de sa position de libération. Le moyen d'actionnement 13 permet d'accélérer la montée en pression en début du cycle de cuisson, en assistant mécaniquement le déplacement du moyen de sécurité 9 vers la position de blocage étanche de ce dernier. Grâce à cette assistance au déplacement du moyen de sécurité à l'ouverture 9, il est possible de recourir à un moyen de sécurité à l'ouverture 9 relativement lourd, ce qui permet de mettre en oeuvre une pression de descente relativement élevée permettant d'ouvrir plus rapidement, avec plus de précision temporelle, l'appareil 1.

La mise en oeuvre de l'assistance au déplacement du moyen de sécurité à l'ouverture 9 selon l'invention permet en outre de fournir à l'utilisateur une indication visuelle de la montée en pression de l'appareil. En effet, une fois placé dans sa première position intermédiaire par le moyen d'actionnement 13, le moyen de sécurité à l'ouverture 9 doit encore opérer, sous l'effet de la montée en pression dans l'enceinte, une course résiduelle jusqu'à sa position de blocage étanche. La présence de cette course résiduelle permet ainsi de différencier deux états distincts de l'appareil 1, *i.e.* un premier état correspondant à la première position intermédiaire et un deuxième état correspondant à la position de blocage. Dans l'exemple illustré aux figures, la poignée de couvercle 6 comporte avantageusement une platine de commande 60 attachée au couvercle 3, sur la face externe 3B de ce dernier, de manière à coiffer le premier orifice ainsi que la tige manométrique 11. Avantageusement, la platine de commande 60 comporte un puits 60A destiné à accueillir en son sein, de préférence de façon ajustée, la première portion 110 de la tige 11, afin de guider le coulissement axial de ladite tige 11. Le puits 60A se présente ainsi sous la forme d'un conduit de section circulaire s'étendant entre d'une part une ouverture interne débouchant en regard du premier orifice et de la face externe 3B du couvercle 3 et d'autre part une ouverture externe 600 opposée, débouchant sur la face visible de la platine de commande 60, ladite ouverture externe 600 étant ainsi tout à fait visible par l'utilisateur. De préférence, la tige manométrique 11 est conformée et dimensionnée pour que son extrémité supérieure 11 B affleure sensiblement (voire même fasse saillie de) l'orifice extérieur 600 du puits 60A lorsque le moyen de sécurité à l'ouverture 9 est en position de blocage. L'extrémité supérieure 11 B se retrouve au contraire enfoncée au sein du puits, à distance de l'orifice externe 600, lorsque le moyen de sécurité à l'ouverture 9 se trouve dans sa première position intermédiaire. Ceci permet à l'utilisateur d'identifier visuellement si la pression de montée a été atteinte. La conception spécifique retenue dans le cadre de l'invention permet en outre d'évacuer par le premier orifice, en début de cycle de cuisson, l'air présent dans l'enceinte, et ce sans qu'il ne soit besoin de prévoir un moyen de purge additionnel.

Avantageusement, le moyen d'actionnement 13 est conçu pour être commandé manuellement par un utilisateur. Dans ce mode de réalisation avantageux, illustré aux figures, le moyen d'actionnement 13 est donc contrôlé directement par l'utilisateur. Il est également envisageable, sans pour autant que l'on sorte du cadre de l'invention, que le moyen d'actionnement 13 soit semi-automatique, c'est-à-dire contrôlé indirectement par l'utilisateur. Dans ce cas, au lieu de répondre directement à une sollicitation manuelle de l'utilisateur, le moyen d'actionnement 13 pourrait répondre par exemple à une rotation du couvercle 3 relativement à la cuve 2 (par exemple lors du passage de la configuration de désaccouplement à la configuration d'accouplement). Avantageusement, le moyen d'actionnement 13 est mobile, et est par exemple monté mobile sur le couvercle 3, et de préférence sur la poignée de couvercle 6, entre une première position de butée (illustrée aux figures 8 à 10) et une deuxième position de butée (illustrée aux figures 12 à 15).

De préférence, le moyen d'actionnement 13 est monté à coulissement radial relativement à l'axe de symétrie X-X', c'est-à-dire selon une direction D1 correspondant avantageusement et sensiblement à la direction d'extension longitudinale de la poignée de couvercle 6. Le moyen d'actionnement 13 comprend avantageusement, comme illustré aux figures, une rampe d'actionnement 13A conçue pour entraîner le moyen de sécurité à l'ouverture 9 de sa position de libération à sa première position intermédiaire lorsque le moyen d'actionnement 13 passe de sa première position de butée à sa deuxième position de butée, par glissement du moyen de sécurité à l'ouverture 9 le long de ladite rampe d'actionnement 13A, laquelle convertit avantageusement le mouvement de coulissement radial du moyen d'actionnement 13 en mouvement vertical ascendant du moyen de sécurité à l'ouverture 9. Dans l'exemple illustré aux figures, la rampe d'actionnement 13A est conçue pour venir engager la face inférieure 111C de la portion élargie 111 de la tige manométrique 11, afin de soulever cette dernière de telle sorte que la portion élargie 111 n'est plus en contact, comme elle l'était initialement, avec la face externe 3B du couvercle 3. De préférence, la rampe d'actionnement 13A se prolonge par un zone d'appui 13B sur laquelle est destiné à venir reposer la face latérale inférieure 111 D de la portion élargie 111 lorsque le moyen d'actionnement 13 a atteint sa deuxième position de butée. Avantageusement, la rampe d'actionnement 13A se présente sous la forme d'une fourche en U dont l'entrefer est destiné à accueillir la deuxième portion 112 de la tige manométrique 11 lorsque le moyen d'actionnement 13 se trouve dans sa deuxième position de butée, chaque extrémité des bras du U étant biseautée pour venir soulever, par effet de coin, la portion élargie 111 et emmener ainsi le moyen de sécurité à l'ouverture 9 dans sa première position intermédiaire, illustrée notamment à la figure 12. La fourche en U en question est avantageusement définie par un enlèvement de matière hémicirculaire qui délimite un rebord supérieur en U formant de préférence la zone d'appui 13B précitée. Ainsi, les frottements sont réduits entre la tige 11 et le moyen d'actionnement 13, du fait de la géométrie spécifique du rebord supérieur en U (qui est de préférence légèrement chanfreiné) et de la face inférieure tronconique 111D, permettant d'éviter un appui plan générateur de frictions.

Avantageusement, l'appareil 1 comprend également un verrou 14 mobile entre une position de verrouillage, dans laquelle il empêche la séparation du couvercle 3 et de la cuve 2, et une position de déverrouillage dans laquelle il autorise la séparation du couvercle 3 et de la cuve 2. A cette fin, le verrou 14 est avantageusement conçu pour interagir, directement ou indirectement, avec le système d'accouplement à baïonnette, par exemple pour empêcher, lorsqu'il se trouve en position de verrouillage, toute rotation du couvercle 3 relativement à la cuve 2 qui pourrait conduire au désaccouplement du couvercle 3 et de la cuve 2.

De préférence, ledit appareil 1 comprend un organe de commande 15 unique pour commander à la fois le déplacement du verrou 14 entre ses positions de verrouillage et déverrouillage et le déplacement du moyen d'actionnement 13, en l'occurrence entre ses première et deuxième positions de butée. Avantageusement, ledit organe de commande 15 unique commande à la fois le déplacement du verrou 14 entre ses positions de verrouillage et déverrouillage et le déplacement du moyen d'actionnement 13 entre ses première et deuxième positions de butée, de façon que lorsque ledit moyen d'actionnement 13 se trouve dans sa première position de butée, le verrou 14 est en position de déverrouillage, tandis que lorsque ledit moyen d'actionnement 13 se trouve dans sa deuxième position de butée, le verrou 14 se trouve en position de verrouillage. L'organe de commande 15 est de préférence un organe de commande manuel, qui se présente sous la forme par exemple d'un bouton coulissant radialement selon la direction D1 précitée, ledit bouton étant conçu pour évoluer entre deux positions de butées correspondants respectivement d'une part à la position de verrouillage du verrou 14 et à la deuxième position de butée du moyen d'actionnement 13 et d'autre part à la position de déverrouillage du verrou 14 et à la première position de butée du moyen d'actionnement 13. De préférence, et comme cela est plus particulièrement visible aux figures 5 et 6, lesdits moyen d'actionnement 13, verrou 14 et organe de commande 15 sont formés par une pièce unique, d'un seul tenant, réalisée par exemple en matière plastique. Cette disposition technique, qui permet une construction simplifiée, compacte, robuste et bon marché de l'appareil 1, constitue d'ailleurs une invention en tant que telle.

Le verrou 14 comprend avantageusement un premier ergot de verrouillage 16, ledit appareil 1 comprenant en outre un logement de verrouillage 17, dont la forme est préférentiellement complémentaire de celle du premier ergot de verrouillage 16, ménagé sur la poignée de cuve 7 et destiné à coopérer avec ledit premier ergot de verrouillage 16 pour que ce dernier soit capturé dans le logement de verrouillage 17 lorsque le verrou 14 se trouve en position de verrouillage, empêchant ainsi le déplacement relatif des poignées de cuve 7 et de couvercle 6, et soit disposé hors du logement de verrouillage 17 lorsque le verrou 14 se trouve en position de déverrouillage, autorisant ainsi dans ce cas le déplacement relatif des poignées de cuve 7 et de couvercle 6. Par exemple, le premier ergot de verrouillage 16 se présente, comme illustré aux figures, sous la forme d'un pied sensiblement parallélépipédique, ledit pied étant conçu pour coulisser radialement, selon la direction radiale D1, sous l'effet du déplacement du verrou 14 dont il fait partie, entre une position de capture, dans laquelle il est introduit dans le logement de verrouillage 17, et une position de dégagement, dans laquelle il se trouve hors dudit logement de verrouillage 17. Le logement de verrouillage 17 présente quant à lui sensiblement une forme en U, comme visible en particulier à la figure 2. De préférence, comme illustré aux figures, l'appareil 1 est conçu pour que le premier ergot de verrouillage 16 ne puisse pénétrer dans le logement de verrouillage 17 que lorsque les poignées de cuve 7 et de couvercle 6 sont superposées et alignées, comme représenté à la figure 1. Dans cette configuration, qui correspond à la configuration d'accouplement du couvercle 3 de la cuve 2, le premier ergot de verrouillage 16 se retrouve disposé en face du logement 17, de sorte qu'il peut y pénétrer par coulissement radial centripète.

Avantageusement, l'appareil 1 comprend une rampe 18 de réarmement du verrou 14 disposée sur la poignée de cuve 7, de préférence dans la continuité du logement de verrouillage 17. Ladite rampe 18 de réarmement est destinée à coopérer avec le premier ergot de verrouillage 16 pour que la rotation relative desdites poignées de cuve 7 et de couvercle 6 commandant le passage du système d'accouplement de sa configuration de désaccouplement à sa configuration d'accouplement entraîne ledit verrou 14 dans sa position de déverrouillage, par glissement dudit premier ergot de verrouillage 16 le long de ladite rampe 18 de réarmement. La rampe 18 de réarmement permet ainsi d'éviter, dans le cas où le verrou 14 aurait été placé par accident en position de verrouillage alors que le couvercle 3 n'avait pas encore été rapporté sur la cuve 2, que le premier ergot de verrouillage 16 ne vienne buter contre la poignée de cuve 7 lors de la rotation de fermeture du couvercle 3 relativement à la cuve 2 ce qui empêcherait de parvenir à la configuration d'accouplement dans laquelle les poignées de couvercle 6 et de cuve 7 sont superposées et alignées. Afin d'éviter de se retrouver dans la situation intempestive décrite ci-avant, c'est-à-dire la situation où le verrou 14 se trouve en position de verrouillage alors que le couvercle 3 est séparé de la cuve 2, l'appareil 1 comprend avantageusement un moyen de blocage 19 du verrou en position de déverrouillage, ledit moyen de blocage 19 étant monté mobile, de préférence sur le verrou 14 lui-même, entre une position de blocage dans laquelle il interdit au verrou 14 de quitter sa position de déverrouillage, et une position de déblocage dans laquelle il autorise le verrou 14 à quitter sa position de déverrouillage. Ledit appareil 1 comprend également de préférence une rampe de désactivation 20 du moyen de blocage 19 destiné à coopérer avec ce dernier pour que la rotation relative desdites poignées de cuve 7 et de couvercle 6 commandant le passage du système d'accouplement de sa configuration de désaccouplement à sa configuration d'accouplement entraîne le moyen de blocage 19 dans sa position de déblocage, par glissement dudit moyen de blocage 19 le long de ladite rampe de désactivation 20. Par exemple, le moyen de blocage 19 comporte une pièce en L montée à rotation sur le verrou 14 lui-même, selon un axe de rotation Y-Y' sensiblement perpendiculaire à la direction de déplacement en translation radiale du verrou 14. L'une des branches de la pièce en L forme un ergot de commande 19A, tandis que l'autre branche de la pièce en L forme un ergot de blocage 19B. La pièce en L est avantageusement montée en rotation entre une position de rappel élastique dans laquelle ledit ergot de commande 19A fait saillie verticalement de la poignée de couvercle 6 (parallèlement au premier ergot de verrouillage 16, comme illustré à la figure 10) et une position d'effacement dans laquelle l'ergot de commande 19A est escamotée à l'intérieur de la poignée 6, sous l'effet de la rotation de la pièce en L. Dans la position de rappel élastique, l'ergot de blocage 19B vient en butée contre une conformation complémentaire ménagée dans la poignée 6, empêchant ainsi le déplacement radial centripète du verrou 14.

Inversement, dans la position d'effacement, l'ergot de blocage 19B ne se trouve plus en regard de la conformation complémentaire, de sorte que le verrou 14 peut librement se déplacer dans la direction centripète. Bien entendu, la rotation de la pièce en L est commandée par la rampe de désactivation 20, qui sous l'effet de la rotation des poignées de couvercle 6 et de cuve 7 l'une vers l'autre repousse l'ergot de commande 19A vers le haut, entraînant ainsi le basculement de la pièce en L selon l'axe Y-Y' comme exposé ci-avant.

Avantageusement, afin d'améliorer encore la sécurité de fonctionnement de l'appareil 1, le verrou 14 comprend un deuxième ergot de verrouillage 21 conçu pour former, lorsque le verrou 14 se trouve en position de verrouillage, un butoir pour au moins l'une des rampes inférieures 4 de verrouillage solidaire de la cuve 2, afin d'empêcher la rotation relative de la cuve 2 et du couvercle 3, et pour autoriser, lorsque le verrou 14 se trouve en position de déverrouillage, la libre rotation du couvercle 3 relativement à la cuve 2. Avantageusement, et comme illustré aux figures, le deuxième ergot de verrouillage 21 s'étend sensiblement perpendiculairement au premier ergot de verrouillage 16. Par exemple, comme illustré, le premier ergot de verrouillage 16 s'étend sensiblement verticalement vers le bas à partir de la face inférieure de la poignée de couvercle 6, tandis que le deuxième ergot de verrouillage 21 s'étend sensiblement radialement, vers l'intérieur de l'appareil, à partir du premier ergot de verrouillage 16. Dans le cas classique où le couvercle 3 est pourvu, à sa périphérie, d'un bord tombant, une fenêtre de passage est ménagée dans ledit bord tombant pour permettre le passage du deuxième ergot de verrouillage 21, lequel est conçu pour se trouver, lorsque le verrou 14 est en position de verrouillage, sur la trajectoire circulaire de déplacement de l'une des rampes inférieures 4, que le deuxième ergot de verrouillage 21 vient ainsi bloquer en position.

Avantageusement, le verrou 14 comprend également une première butée 14A qui interfère avec la trajectoire de déplacement du moyen de sécurité à l'ouverture 9 lorsque le verrou 14 est en position de déverrouillage, de façon à former un obstacle contre lequel ledit moyen de sécurité à l'ouverture 9 est destiné à venir en appui pour être ainsi empêché de pouvoir rejoindre sa position de blocage à partir de sa position de libération. Dans cette configuration, la tige 11 coopère avec le premier orifice pour définir une section de fuite avantageusement maximale, afin d'éviter toute montée en pression alors que le verrou 14 n'est pas en position de verrouillage. Avantageusement, la première butée 14A interfère avec la trajectoire de déplacement du moyen de sécurité à l'ouverture 9 tant que le verrou 14 n'est pas en position de déverrouillage, de façon à former un obstacle contre lequel ledit moyen de sécurité à l'ouverture 9 est destiné à venir en appui pour être ainsi empêché de pouvoir rejoindre sa position de blocage à partir de sa position de libération. Ainsi, toute montée en pression significative est empêchée si le verrou 14 n'est pas correctement activé (par exemple, comme illustré à la figure 11, s'il a quitté sa position de déverrouillage mais n'a pas atteint sa position de verrouillage car l'utilisateur n'a pas suffisamment poussé le bouton formant organe de commande 15). Ladite première butée 14A est également conçue pour s'effacer hors de la trajectoire de déplacement du moyen de sécurité 9 lorsque le verrou 14 est en position de verrouillage. Avantageusement, comme illustré aux figures, la butée 14A est conformée pour venir interférer avec la trajectoire de déplacement verticale de la portion élargie 111, de façon que la face supérieure 111 A de ladite portion élargie 111 vienne en butée contre et sous la première butée 14A. Ceci permet d'éviter que la tige manométrique 11 puisse monter et rejoindre, sous l'effet de la montée en pression au sein de l'enceinte, sa position de blocage étanche alors que le verrou 14 n'est pas en position de verrouillage, ce qui entraînerait un risque pour l'utilisateur.

Avantageusement, le moyen de sécurité à l'ouverture 9 est conçu pour interférer lui-même avec la trajectoire de déplacement du verrou 14 lorsque le moyen de sécurité à l'ouverture 9 est en position de blocage, de façon à former un obstacle contre lequel ledit verrou 14 est destiné à venir en appui pour être ainsi empêché de pouvoir rejoindre sa position de déverrouillage à partir de sa position de verrouillage. Par exemple, dans le mode de réalisation illustré aux figures, l'appareil 1 est conçu pour que la face latérale supérieure 111 B de la portion élargie 111 de la tige de sécurité 11 forme une butée d'arrêt pour une face d'appui complémentaire 22 ménagée sur le verrou 14. Ceci permet d'éviter tout déverrouillage alors que la pression régnant dans l'enceinte est encore élevée, ce qui pourrait conduire à une situation dangereuse pour l'utilisateur. En définitive, dans ce mode de réalisation préférentiel tel qu'illustré aux figures, l'utilisateur peut commander manuellement le verrouillage et le déverrouillage en faisant coulisser dans un sens ou dans l'autre un simple bouton poussoir formant l'organe de commande 15 unique, ce dernier servant à piloter le verrouillage/déverrouillage et permettant également d'une part de forcer le déplacement du moyen de sécurité à l'ouverture 9 dans sa première position intermédiaire et d'autre part d'interagir avec le verrou 14 pour empêcher tout déverrouillage intempestif alors que la pression régnant dans l'enceinte est encore élevée. Cette combinaison de fonction constitue d'ailleurs en tant que telle une invention.

De façon préférentielle, et comme déjà évoqué dans ce qui précède, le moyen de sécurité à l'ouverture 9 définit, en coopération avec ledit premier orifice, une première section de fuite lorsqu'il se trouve en position de libération et une deuxième section de fuite lorsqu'il se trouve dans sa première position intermédiaire, ladite deuxième section de fuite étant inférieure à ladite première section de fuite. Grâce à cette caractéristique, il est possible de bénéficier à la fois d'un excellent niveau de sécurité et d'une montée en pression rapide. En effet, tant que le moyen de sécurité à l'ouverture se trouve en position de libération, la section de fuite, qui est définie par la coopération du premier tronçon 112A avec le premier orifice peut être importante, de façon à éviter toute montée en pression, y compris lorsque l'appareil 1 est soumis à une puissance de chauffe importante. En revanche, dès lors que le moyen de sécurité à l'ouverture 9 se trouve dans sa première position intermédiaire, sous l'effet d'une action de verrouillage exercée par l'utilisateur sur l'organe de commande 15 unique, la section de fuite est cette fois définie par la coopération du deuxième tronçon 112B, de section plus importante que le premier tronçon 112A, avec le premier orifice. Cette section de fuite plus réduite permet d'accélérer la montée en pression, et ainsi de raccourcir le cycle de cuisson. Avantageusement, le moyen de sécurité à l'ouverture 9 définit, en coopération avec ledit premier orifice, une troisième section de fuite lorsqu'il vient en appui contre ladite première butée 14A, ladite troisième section de fuite étant de préférence supérieure à ladite première section de fuite. Dans le mode de réalisation illustré aux figures, le moyen de sécurité à l'ouverture 9 est avantageusement conçu pour pouvoir, lorsque le verrou 14 est en position de déverrouillage, se déplacer légèrement vers le haut, sous l'effet d'une éventuelle montée en pression au sein de l'enceinte, jusqu'à venir en butée contre ladite première butée 14A. Ce léger déplacement permet de décoller la face inférieure 111C de la portion élargie 111, ce qui permet d'accroître encore la section de fuite et ainsi de réduire rapidement le niveau de pression au sein de l'appareil 1. Un autre intérêt de la conception spécifique illustrée par les figures réside dans le fait que lorsque le verrou 14 se trouve, comme illustré à la figure 11, dans une position intermédiaire entre ses positions de verrouillage et de déverrouillage, la portion élargie 111, et plus précisément la face supérieure 111 A de ladite portion élargie 111, se trouve en regard d'une surface inclinée 14B, qui s'étend dans le prolongement de la surface plane de butée 14A, la surface inclinée 14B permettant d'augmenter progressivement la course verticale ascendante de la tige manométrique 11, tout en interdisant à cette dernière d'atteindre sa position d'étanchéité supérieure et en établissant d'une section de fuite permettant de garantir la sécurité d'utilisation.

Un exemple d'utilisation de l'appareil 1 conforme au mode de réalisation illustré aux figures va maintenant être décrit. En premier lieu, l'utilisateur dispose dans la cuve 2 les aliments à cuire. L'utilisateur rapporte ensuite le couvercle 3 sur la cuve en décalant angulairement les poignées de cuve 7 et de couvercle 6. L'utilisateur opère ensuite une rotation du couvercle 3 relativement à la cuve 2 pour inter-engager les rampes inférieures 4 et supérieures 5, en s'aidant au besoin des poignées de cuve 7 et de couvercle 6, jusqu'à ce que lesdites poignées de couvercle 6 et de cuve 7 se retrouvent alignées et superposées, comme illustré à la figure 1. L'action d'alignement des poignées 6, 7 entraîne concomitamment, par interaction de la rampe de désactivation 20 avec le moyen de blocage 19, la désactivation du moyen de blocage 19 qui se retrouve dans sa position de déblocage. Dans cette configuration, la tige manométrique 11 se trouve dans sa position basse correspondant à la position de libération.

L'utilisateur presse ensuite selon une direction radiale centripète le poussoir formant l'organe de commande 15 ce qui a pour effet :
- de placer le premier ergot de verrouillage 16 dans le logement de verrouillage 17 empêchant dès lors tout désaccouplement du couvercle 3 et de la cuve 2,
- de placer le deuxième ergot de verrouillage 21 sur la trajectoire de l'une des rampes inférieure 4, empêchant ainsi tout désaccouplement du couvercle 3 et de la cuve 2,
- et d'entraîner le moyen d'actionnement 13 dans sa deuxième position de butée, ce qui a pour effet de repousser la tige manométrique 11 vers le haut jusque dans la première position intermédiaire, par interaction de la rampe d'actionnement 3A avec la face inférieure 111C de la portion élargie 111 de la tige manométrique 11. L'utilisateur peut ensuite soumettre l'appareil 1 ainsi fermé et dûment verrouillé à une source de chauffe. Sous l'effet de l'énergie thermique apportée par la source de chauffe, la pression au sein de l'enceinte de cuisson va augmenter jusqu'à atteindre la pression de montée, ce qui engendre la montée de la tige manométrique 11 dans sa position haute étanche, correspondant à la position de blocage. Dans cette position, l'utilisateur sait que la montée en pression a eu lieu puisqu'il peut apercevoir, dans l'ouverture 600, l'extrémité supérieure 11 B de la tige 11, ladite tige 11 empêchant en outre tout déverrouillage grâce à la coopération de la face latérale supérieure 111 B de la portion élargie 111 avec la face d'appui complémentaire 22. A la fin du cycle de cuisson, l'utilisateur coupe la source de chauffe et attend que la pression descende suffisamment au sein de l'enceinte pour que la tige manométrique 11 retombe dans sa première position intermédiaire, qui autorise le déverrouillage par déplacement radial centrifuge du bouton coulissant formant l'organe de commande unique 15. L'utilisateur n'a alors plus qu'à opérer une rotation relative du couvercle 3 et de la cuve 2 en sens antihoraire (dans l'exemple illustré aux figures) pour désengager les rampes 4, 5 du système à baïonnette et ainsi pouvoir désaccoupler le couvercle 3 de la cuve 2 et accéder aux aliments cuits.

### POSSIBILITE D'APPLICATION INDUSTRIELLE

L'invention trouve son application industrielle dans la conception, la fabrication et l'utilisation d'appareils de cuisson d'aliments sous pression.

## Revendications

1. Appareil (1) de cuisson d'aliments sous pression, de préférence constitué par un autocuiseur domestique, comprenant au moins :
- une cuve (2) et un couvercle (3) destiné à être associé à ladite cuve pour former une enceinte de cuisson,
- un premier orifice ménagé à travers le couvercle (3),
- un moyen de sécurité à l'ouverture (9) monté mobile entre d'une part une position de libération, dans laquelle il autorise la dissociation du couvercle (3) et de la cuve (2) tout en libérant ledit premier orifice pour mettre en communication l'intérieur de l'enceinte avec l'extérieur, et d'autre part une position de blocage, dans laquelle il interdit la dissociation du couvercle (3) et de la cuve (2) tout en obturant ledit premier orifice afin de permettre la montée en pression de l'enceinte, ledit moyen de sécurité à l'ouverture (9) étant conçu pour se trouver en position de blocage lorsque la pression régnant dans l'enceinte est supérieure ou égale à une valeur prédéterminée dite pression de montée,
**caractérisé en ce que** ledit moyen de sécurité à l'ouverture (9) est conçu pour passer, lorsqu'il se déplace de l'une à l'autre desdites positions de libération et de blocage, par une première position intermédiaire dans laquelle il libère ledit premier orifice pour mettre en communication l'intérieur de l'enceinte avec l'extérieur, ledit appareil (1) comprenant en outre un moyen d'actionnement (13) du moyen de sécurité à l'ouverture (9), conçu pour permettre d'amener le moyen de sécurité à l'ouverture (9) dans sa première position intermédiaire à partir de sa position de libération quel que soit le niveau de pression régnant dans l'enceinte de cuisson, le moyen de sécurité à l'ouverture (9), une fois placé dans sa première position intermédiaire par le moyen d'actionnement (13), étant conçu pour opérer, sous l'effet de la montée en pression dans l'enceinte, une course résiduelle jusqu'à sa position de blocage.

2. Appareil (1) selon la revendication 1 **caractérisé en ce que** ladite position de libération est une position de rappel, ledit moyen de sécurité à l'ouverture (9) étant rappelé en position de libération par un effort de rappel formé de préférence par le poids dudit moyen de sécurité à l'ouverture (9).

3. Appareil (1) selon l'une des revendications 1 et 2 **caractérisé en ce que** ledit moyen de sécurité à l'ouverture (9) est conçu pour être maintenu en position de blocage par un effort de maintien résultant uniquement de la pression régnant dans l'enceinte.

4. Appareil (1) selon l'une des revendications 1 à 3 **caractérisé en ce qu'**il comprend un verrou (14) mobile entre une position de verrouillage dans laquelle il empêche la séparation du couvercle (3) et de la cuve (2), et une position de déverrouillage dans laquelle il autorise la séparation du couvercle (3) et de la cuve (2).

5. Appareil (1) selon la revendication 4 **caractérisé en ce que** ledit verrou (14) comprend une première butée (14A) qui interfère avec la trajectoire de déplacement du moyen de sécurité à l'ouverture (9) lorsque le verrou (14) est en position de déverrouillage, de façon à former un obstacle contre lequel ledit moyen de sécurité à l'ouverture (9) est destiné à venir en appui pour être ainsi empêché de pouvoir rejoindre sa position de blocage à partir de sa position de libération, ladite première butée (14A) s'effaçant hors de la trajectoire de déplacement du moyen de sécurité lorsque le verrou (14) est en position de verrouillage.

6. Appareil (1) selon la revendication 5 **caractérisé en ce que** ledit moyen de sécurité à l'ouverture (9) interfère avec la trajectoire de déplacement du verrou (14) lorsque le moyen de sécurité à l'ouverture est en position de blocage, de façon à former un obstacle contre lequel ledit verrou (14) est destiné à venir en appui pour être ainsi empêché de pouvoir rejoindre sa position de déverrouillage à partir de sa position de verrouillage.

7. Appareil selon l'une des revendications 4 à 6 **caractérisé en ce que** le moyen d'actionnement (13) est mobile et **en ce que** ledit appareil (1) comprend un organe de commande (15) unique pour commander à la fois le déplacement du verrou (14) entre ses positions de verrouillage et déverrouillage et le déplacement du moyen d'actionnement (13), lesdits moyen d'actionnement (13), verrou (14) et organe de commande (15) étant de préférence formés par une pièce unique, d'un seul tenant.

8. Appareil (1) selon l'une des revendications 1 à 7 **caractérisé en ce que** ledit moyen d'actionnement (13) est monté mobile sur le couvercle (3) entre une première position de butée et une deuxième position de butée, ledit moyen d'actionnement (13) comprenant une rampe d'actionnement (13A) conçue pour entraîner le moyen de sécurité à l'ouverture (9) de sa position de libération à sa première position intermédiaire, lorsque le moyen d'actionnement (13) passe de sa première position de butée à sa deuxième position de butée, par glissement du moyen de sécurité à l'ouverture (9) le long de ladite rampe d'actionnement (13A).

9. Appareil (1) selon les revendications 7 et 8 **caractérisé en ce que** ledit organe de commande unique commande (15) à la fois le déplacement du verrou (14) entre ses positions de verrouillage et déverrouillage et le déplacement du moyen d'actionnement (13) entre ses première et deuxième positions de butée, de façon que lorsque ledit moyen d'actionnement (13) se trouve dans sa première position de butée, le verrou (14) est en position de déverrouillage, tandis que lorsque ledit moyen d'actionnement (13) se trouve dans sa deuxième position de butée, le verrou (14) se trouve en position de verrouillage.

10. Appareil (1) selon l'une des revendications 1 à 9 **caractérisé en ce qu'**il comprend un système d'accouplement à baïonnette capable d'évoluer entre une configuration d'accouplement et une configuration de désaccouplement du couvercle (3) et de la cuve (2), ledit appareil (1) comprenant au moins une poignée de couvercle (6) solidaire du couvercle (3) et une poignée de cuve (7) solidaire de la cuve (2), lesdites poignées de cuve et de couvercle (6) étant mobiles en rotation l'une par rapport à l'autre une fois le couvercle (3) rapporté sur la cuve (2), de manière à commander le passage du système d'accouplement de sa configuration d'accouplement à sa configuration de désaccouplement et vice-versa, ledit moyen d'actionnement étant monté mobile sur la poignée de couvercle.

11. Appareil (1) selon les revendications 4 et 10 **caractérisé en ce que** ledit verrou (14) comprend un premier ergot de verrouillage (16), ledit appareil (1) comprenant une rampe (18) de réarmement du verrou (14) disposée sur la poignée de cuve (7) et destinée à coopérer avec ledit premier ergot de verrouillage (16) pour que la rotation relative desdites poignées de cuve (6) et de couvercle commandant le passage du système d'accouplement de sa configuration de désaccouplement à sa configuration d'accouplement entraîne ledit verrou (14) dans sa position de déverrouillage par glissement dudit premier ergot de verrouillage (16) le long de ladite rampe de réarmement.

12. Appareil (1) selon les revendications 4 et 10 **caractérisé en ce qu'**il comprend un moyen de blocage (19) du verrou en position de déverrouillage, ledit moyen de blocage (19) étant monté mobile entre une position de blocage dans laquelle il interdit au verrou (14) de quitter sa position de déverrouillage, et une position de déblocage dans laquelle il autorise le verrou (14) à quitter sa position de déverrouillage, ledit appareil (1) comprenant un rampe de désactivation (20) du moyen de blocage (19) destinée à coopérer avec ce dernier pour que la rotation relative desdites poignées de cuve (7) et de couvercle (6) commandant le passage du système d'accouplement de sa configuration de désaccouplement à sa configuration d'accouplement entraîne ledit moyen de blocage (19) dans sa position de déblocage, par glissement dudit moyen de blocage (19) le long de ladite rampe de désactivation (20).

13. Appareil (1) selon les revendications 4 et 10 **caractérisé en ce que** ledit système d'accouplement à baïonnette comprend des rampes inférieures (4) de verrouillage solidaires de la cuve (2) et des rampes supérieures (5) de verrouillage solidaires du couvercle (3), ledit verrou (14) comprenant un deuxième ergot de verrouillage (21) conçu pour former, lorsque le verrou (14) se trouve en position de verrouillage, un butoir pour au moins l'une des rampes inférieures (4), afin d'empêcher la rotation relative de la cuve (2) et du couvercle (3), et pour autoriser, lorsque le verrou (14) se trouve en position de déverrouillage, la libre rotation du couvercle (3) relativement à la cuve (2).

14. Appareil (1) selon l'une des revendications 1 à 13 **caractérisé en ce que** le moyen de sécurité à l'ouverture (9) définit, en coopération avec ledit premier orifice, une première section de fuite lorsqu'il se trouve en position de libération et une deuxième section de fuite lorsqu'il se trouve dans sa première position intermédiaire, ladite deuxième section de fuite étant inférieure à ladite première section de fuite.

15. Appareil (1) selon les revendications 5 et 14 **caractérisé en ce que** le moyen de sécurité à l'ouverture définit (9), en coopération avec ledit premier orifice, une troisième section de fuite lorsqu'il vient en appui contre ladite première butée (14A), ladite troisième section de fuite étant supérieure à ladite première section de fuite.

## Patentansprüche

1. Druckkochvorrichtung (1) für Nahrungsmittel, die vorzugsweise von einem Haushalts-Schnellkochtopf gebildet ist, mindestens umfassend:
- eine Wanne (2) und einen Deckel (3), der dazu bestimmt ist, mit der Wanne verbunden zu werden, um einen Kochbehälter zu bilden,
- eine erste Öffnung, die durch den Deckel (3) hindurch ausgenommen ist,
- ein Öffnungssicherheitsmittel (9), das beweglich zwischen einerseits einer Freigabeposition, in der es die Trennung des Deckels (3) und der Wanne (2) gestattet, wobei es die erste Öffnung freigibt, um das Innere des Behälters mit außen zu verbinden, und andererseits einer Feststellungsposition montiert ist, in der es die Trennung des Deckels (3) und der Wanne (2) verbietet, wobei es die erste Öffnung verschließt, um den Druckanstieg des Behälters zu ermöglichen, wobei das Öffnungssicherheitsmittel (9) dazu vorgesehen ist, sich in Feststellungsposition zu befinden, wenn der in dem Behälter herrschende Druck größer oder gleich einem vorbestimmten Druck, Anstiegsdruck genannt, ist,
**dadurch gekennzeichnet, dass** das Öffnungssicherheitsmittel (9) dazu vorgesehen ist, wenn es sich von der einen in die andere der Freigabe- und Feststellungspositionen begibt, eine erste Zwischenposition zu durchlaufen, in der es die erste Öffnung freigibt, um das Innere des Behälters mit außen zu verbinden, wobei die Vorrichtung (1) ferner ein Betätigungsmittel (13) des Öffnungssicherheitsmittels (9) umfasst, das dazu vorgesehen ist, es zu ermöglichen, das Öffnungssicherheitsmittel (9) in seine erste Zwischenposition aus seiner Freigabeposition unabhängig von dem im Kochbehälter herrschenden Druck zu bringen, wobei das Öffnungssicherheitsmittel (9), wenn es in seiner ersten Zwischenposition durch das Betätigungsmittel (13) angeordnet ist, dazu vorgesehen ist, unter der Wirkung des Druckanstiegs im Behälter einen Resthub bis zu seiner Feststellungsposition auszuführen.

2. Vorrichtung (1) nach Anspruch 1, **dadurch gekennzeichnet, dass** die Freigabeposition eine Rückstellposition ist, wobei das Öffnungssicherheitsmittel (9) in die Freigabeposition durch eine Rückstellkraft zurückgestellt wird, die vorzugsweise vom Gewicht des Öffnungssicherheitsmittels (9) gebildet ist.

3. Vorrichtung (1) nach einem der Ansprüche 1 und 2, **dadurch gekennzeichnet, dass** das Öffnungssicherheitsmittel (9) dazu vorgesehen ist, durch eine Haltekraft, die sich nur durch den im Behälter herrschenden Druck ergibt, in Feststellungsposition gehalten zu werden.

4. Vorrichtung (1) nach einem der Ansprüche 1 bis 3, **dadurch gekennzeichnet, dass** sie einen Riegel (14) umfasst, der zwischen einer Verriegelungsposition, in der er die Trennung des Deckels (3) und der Wanne (2) verhindert, und einer Entriegelungsposition, in der er die Trennung des Deckels (3) und der Wanne (2) gestattet, beweglich ist.

5. Vorrichtung (1) nach Anspruch 4, **dadurch gekennzeichnet, dass** der Riegel (14) einen ersten Anschlag (14A) umfasst, der mit der Bewegungsbahn des Öffnungssicherheitsmittels (9) interferiert, wenn der Riegel (14) in Entriegelungsposition ist, um ein Hindernis zu bilden, gegen das das Öffnungssicherheitsmittel (9) zur Anlage gelangen soll, um somit daran gehindert zu werden, seine Feststellungsposition aus seiner Freigabeposition wieder einzunehmen, wobei der erste Anschlag (14A) außerhalb der Bewegungsbahn des Sicherheitsmittels unwirksam ist, wenn der Riegel (14) in Verriegelungsposition ist.

6. Vorrichtung (1) nach Anspruch 5, **dadurch gekennzeichnet, dass** das Öffnungssicherheitsmittel (9) mit der Bewegungsbahn des Riegels (14) interferiert, wenn das Öffnungssicherheitsmittel in Feststellungsposition ist, um ein Hindernis zu bilden, gegen das der Riegel (14) zur Anlage gelangen soll, um somit daran gehindert zu werden, seine Entriegelungsposition aus seiner Verriegelungsposition wieder einzunehmen.

7. Vorrichtung nach einem der Ansprüche 4 bis 6, **dadurch gekennzeichnet, dass** das Betätigungsmittel (13) beweglich ist, und dass die Vorrichtung (1) ein einziges Steuerelement (15) umfasst, um sowohl die Bewegung des Riegels (14) zwischen seinen Verriegelungs- und Entriegelungspositionen als auch die Bewegung des Betätigungsmittels (13) zu steuern, wobei das Betätigungsmittel (13), der Riegel (14) und das Steuerelement (15) von einem einzigen Teil aus einem Stück gebildet sind.

8. Vorrichtung (1) nach einem der Ansprüche 1 bis 7, **dadurch gekennzeichnet, dass** das Betätigungsmittel (13) beweglich auf dem Deckel (3) zwischen einer ersten Anschlagposition und einer zweiten Anschlagposition montiert ist, wobei das Betätigungsmittel (13) eine Betätigungsrampe (13A) umfasst, die dazu vorgesehen ist, das Öffnungssicherheitsmittel (9) von seiner Freigabeposition in seine Zwischenposition anzutreiben, wenn das Betätigungsmittel (13) von seiner ersten Anschlagposition in seine zweite Anschlagposition übergeht, dadurch, dass das Öffnungssicherheitsmittel (9) entlang der Betätigungsrampe (13A) gleitet.

9. Vorrichtung (1) nach den Ansprüchen 7 und 8, **dadurch gekennzeichnet, dass** das einzige Steuerelement (15) sowohl die Bewegung des Riegels (14) zwischen seinen Verriegelungs- und Entriegelungsposition als auch die Bewegung des Betätigungsmittels (13) zwischen seinen ersten und zweiten Anschlagpositionen steuert, damit, wenn sich das Betätigungsmittel (13) in seiner ersten Anschlagposition befindet, der Riegel (14) in Entriegelungsposition ist, während, wenn sich das Betätigungsmittel (13) in seiner zweiten Anschlagposition befindet, der Riegel (14) in Verriegelungsposition ist.

10. Vorrichtung (1) nach einem der Ansprüche 1 bis 9, **dadurch gekennzeichnet, dass** sie ein Bajonett-Kupplungssystem umfasst, das geeignet ist, sich zwischen einer Kupplungsausführung und einer Entkupplungsausführung des Deckels (3) und der Wanne (2) zu bewegen, wobei die Vorrichtung (1) mindestens einen Deckelgriff (6), der mit dem Deckel (3) verbunden ist, und einen Wannengriff (7), der mit der Wanne (2) verbunden ist, umfasst, wobei die Wannen- und Deckelgriffe (6) in Drehung in Bezug zueinander beweglich sind, wenn der Deckel (3) auf die Wanne (2) aufgesetzt ist, um den Übergang des Kupplungssystems von seiner Kupplungsausführung in seine Entkupplungsausführung und umgekehrt zu steuern, wobei das Betätigungsmittel auf dem Deckelgriff beweglich montiert ist.

11. Vorrichtung (1) nach den Ansprüchen 4 und 10, **dadurch gekennzeichnet, dass** der Riegel (14) einen ersten Verriegelungshaken (16) umfasst, wobei die Vorrichtung (1) eine Rampe (18) zum Nachrüsten des Riegels (14) umfasst, die auf dem Wannengriff (7) angeordnet und dazu bestimmt ist, mit dem ersten Verriegelungshaken (16) zusammenzuwirken, so dass die relative Drehung des Wannengriffs und Deckelgriffs (6), die den Übergang des Kupplungssystems von seiner Entkupplungsausführung in seine Kupplungsausführung steuert, den Riegel (14) in seine Entriegelungsposition durch Gleiten des ersten Verriegelungshakens (16) entlang der Nachrüstrampe antreibt.

12. Vorrichtung (1) nach den Ansprüchen 4 und 10, **dadurch gekennzeichnet, dass** sie ein Mittel (19) zur Feststellung des Riegels in Entriegelungsposition umfasst, wobei das Feststellungsmittel (19) beweglich zwischen einer Feststellungsposition, in der es verhindert, dass der Riegel (14) seine Entriegelungsposition verlässt, und einer Freigabeposition montiert ist, in der es gestattet, dass der Riegel (14) seine Entriegelungsposition verlässt, wobei die Vorrichtung (1) eine Rampe (20) zur Deaktivierung des Feststellungsmittels (19) umfasst, die dazu bestimmt ist, mit diesem letztgenannten zusammenzuwirken, so dass die relative Drehung des Wannengriffs (7) und Deckelgriffs (6), die den Übergang des Kupplungssystems von seiner Entkupplungsausführung in seine Kupplungsausführung steuert, das Feststellungsmittel (19) in seine Freigabeposition durch Gleiten des Feststellungsmittels (19) entlang der Deaktivierungsrampe (20) antreibt.

13. Vorrichtung (1) nach den Ansprüchen 4 und 10, **dadurch gekennzeichnet, dass** das Bajonett-Kupplungssystem untere Verriegelungsrampen (4), die mit der Wanne (2) verbunden sind, und obere Verriegelungsrampen (5), die mit dem Deckel (3) verbunden sind, umfasst, wobei der Riegel (14) einen zweiten Verriegelungshaken (21) umfasst, der dazu vorgesehen ist, wenn sich der Riegel (14) in Verriegelungsposition befindet, einen Anschlag für mindestens eine der unteren Rampen (4) zu bilden, um die relative Drehung der Wanne (2) und des Deckels (3) zu verhindern und, wenn sich der Riegel (14) in Entriegelungsposition befindet, die freie Drehung des Deckels (3) in Bezug zur Wanne (2) zu gestatten.

14. Vorrichtung (1) nach einem der Ansprüche 1 bis 13, **dadurch gekennzeichnet, dass** das Öffnungssicherheitsmittel (9) im Zusammenwirken mit der ersten Öffnung einen ersten Leckageabschnitt, wenn es sich in Freigabeposition befindet, und einen zweiten Leckageabschnitt definiert, wenn es sich in seiner ersten Zwischenposition befindet, wobei der zweite Leckageabschnitt unter dem ersten Leckageabschnitt liegt.

15. Vorrichtung (1) nach den Ansprüchen 5 und 14, **dadurch gekennzeichnet, dass** das Öffnungssicherheitsmittel (9) im Zusammenwirken mit der ersten Öffnung einen dritten Leckageabschnitt definiert, wenn es gegen den ersten Anschlag (14A) zur Anlage gelangt, wobei der dritte Leckageabschnitt über dem ersten Leckageabschnitt liegt.

## Claims

1. A utensil (1) for cooking food under pressure, said utensil comprising at least:
- a vessel (2) and a lid (3) that is designed to be associated with said vessel to form a cooking enclosure;
- a first orifice provided through the lid (3);
- an opening safety means (9) mounted to move between firstly a release position, in which it allows the lid (3) and the vessel (2) to be dissociated from each other while also opening up said first orifice so as to put the inside of the enclosure into communication with the outside, and secondly a blocking position, in which it prevents the lid (3) and the vessel (2) from being dissociated from each other while also closing off said first orifice in order to enable pressure to build up in the enclosure, said opening safety means (9) being designed to be in the blocking position when the pressure prevailing in the enclosure is greater than or equal to a predetermined value referred to as the "rise pressure";
said utensil being **characterized in that**, when moving either way between the release position and the blocking position, said opening safety means (9) is designed to go via a first intermediate position in which it opens up said first orifice so as to put the inside of the enclosure into communication with the outside, said utensil (1) further comprising actuation means (13) for actuating the opening safety means (9), which actuation means are designed to make it possible to bring the opening safety means (9) into its first intermediate position from its release position, regardless of the level of pressure prevailing in the cooking enclosure, the opening safety means 9 being designed, once it is placed in its first intermediate position by the actuation means 13, to travel over a residual stroke to its sealed blocking position, under the effect of the pressure build-up in the enclosure.

2. A utensil (1) according to claim 1, **characterized in that** said release position is a return position, said opening safety means (9) being urged to return into the release position by a return force preferably formed by the weight of said opening safety means (9).

3. A utensil (1) according to one of claims 1 and 2, **characterized in that** said opening safety means (9) is designed to be held in the blocking position by a holding force resulting only from the pressure prevailing in the enclosure.

4. A utensil (1) according to any one of claims 1 to 3, **characterized in that** it includes a latch (14) that is mounted to move between a locking position in which it prevents the lid (3) and the vessel (2) from being separated from each other and an unlocking position in which it allows the lid (3) and the vessel (2) to be separated from each other.

5. A utensil (1) according to claim 4, **characterized in that** said latch (14) is provided with a first abutment (14A) that interferes with the path of movement of the opening safety means (9) when the latch (14) is in the unlocking position, so as to form an obstacle against which said opening safety means (9) is designed to come into abutment so that it is thereby prevented from reaching its blocking position from its release position, said first abutment (14A) retracting out of the path of movement of the safety means when the latch (14) is in the locking position.

6. A utensil (1) according to claim 5, **characterized in that** said opening safety means (9) interferes with the path of movement of the latch (14) when the opening safety means is in the blocking position, so as to form an obstacle against which said latch (14) is designed to come into abutment so that it is thereby prevented from reaching its unlocking position from its locking position.

7. A utensil according to any one of claims 4 to 6, **characterized in that** the actuation means (13) is mounted to be movable, and **in that** said utensil (1) includes a single control member (15) both for causing the latch (14) to move between its locking and unlocking positions, and also for causing the actuation means (13) to move, said actuation means (13), said latch (14) and said control member (15) being formed by a single part, made in one piece.

8. A utensil (1) according to any one of claims 1 to 7, **characterized in that** said actuation means (13) is mounted to move on the lid (3) between a first abutment position and a second abutment position, said actuation means (13) comprising an actuation ramp (13A) designed to drive the opening safety means (9) from its release position to its first intermediate position, when the actuation means (13) goes from its first abutment position to its second abutment position, by the opening safety means (9) sliding along said actuation ramp (13A).

9. A utensil (1) according to claims 7 and 8, **characterized in that** said single control member (15) both causes the latch (14) to move between its locking and unlocking positions and also causes the actuation means (13) to move between its first and second abutment positions, so that when said actuation means (13) is in their first abutment position, the latch (14) is in the unlocking position, while, when said actuation means (13) is in its second abutment position, the latch (14) is in the locking position.

10. A utensil (1) according to any one of claims 1 to 9, **characterized in that** it is provided with a bayonet-fitting coupling system capable of going between a coupling configuration in which the lid (3) and the vessel (2) are coupled to each other and an uncoupling configuration in which they are uncoupled from each other, said utensil (1) having at least one lid handle (6) integral with the lid (3) and at least one a vessel handle (7) integral with the vessel (2), said vessel handle and said lid handle (6) being mounted to turn relative to each other once the lid (3) is placed on the vessel (2) in such a manner as to cause the coupling system to go from its coupling configuration to its uncoupling configuration and vice versa, said actuation means being mounted to move on the lid handle.

11. A utensil (1) according to claims 4 and 10, **characterized in that** said latch (14) is provided with a first locking lug (16), said utensil being provided with a re-cocking ramp (18) for re-cocking the latch (14) which ramp is disposed on the vessel handle (7) and is designed to co-operate with said first locking lug (16) so that said vessel handle (7) and said lid handle (6) turning relative to each other and causing the coupling system to go from its uncoupling configuration to its coupling configuration drives said latch (14) into its unlocking position by said first locking lug (16) sliding along said re-cocking ramp.

12. A utensil (1) according to claims 4 and 10, **characterized in that** it is provided with a blocking means (19) for blocking the latch in the unblocking position, said blocking means (19) being mounted to move between a blocking position in which it prevents the latch (14) from leaving its unlocking position, and an unblocking position in which it allows the latch (14) to leave its unlocking position, said utensil (1) also being provided with a deactivation ramp (20) for deactivating the blocking means (19), which ramp is designed to co-operate with said blocking means so that said vessel handle (7) and said lid handle (6) turning relative to each other and causing the coupling system to go from its uncoupling configuration to its coupling configuration drives said blocking means (19) into its unblocking position, by said blocking means (19) sliding along said deactivation ramp (20).

13. A utensil (1) according to claims 4 and 10, **characterized in that** said bayonet-fitting coupling system comprises lower locking ramps (4) integral with the vessel (2) and upper locking ramps (5) integral with the lid (3), said latch (14) being provided with a second locking lug (21) that, when the latch (14) is in the locking position, is designed to form a stop for at least one of the lower locking ramps (4) in order to prevent the vessel (2) and the lid (3) from turning relative to each other, and, when the latch (14) is in the unlocking position, is designed to allow the lid (3) to turn freely relative to the vessel (2).

14. A utensil (1) according to any one of claims 1 to 13, **characterized in that** the opening safety means (9) co-operates with said first orifice to define a first leakage cross-section when it is in the release position, and a second leakage cross-section when it is in its first intermediate position, said second leakage cross-section being smaller than said first leakage cross-section.

15. A utensil (1) according to claims 5 and 14, **characterized in that** the opening safety means (9) co-operates with said first orifice to define a third leakage cross-section when it comes into abutment against said first abutment (14A), said third leakage cross-section being larger than said first leakage cross-section.
